# EUROPEAN PATENT APPLICATION

(11) **EP 1 182 587 A2**
(43) Date of publication of application: **27.02.2002**
(21) Application number: 01203190.2
(22) Date of filing: 23.08.2001
(51) Int. Cl.: G06F 17/30

(54) **Method and apparatus for information aggregation and personalized display of the aggregated information**

(30) Priority: 25.08.2000 US 227852; 12.04.2001 US 832828
(71) Applicant: Comverse Network Systems, Ltd., Tel-Aviv 69710 (IL)
(72) Inventor: Kahan, Michal, Tel Aviv, 69760 (IL); Keret, Shmuel, Kiryat Ono (IL)
(74) Representative: Jorritsma, Ruurd

(57) **Abstract**

A method and apparatus for aggregating data items to be sent to a mobile terminal subscriber. A plurality of data items are received from content providers and a subscriber provisioning profile is used to select out desired data items for display on a mobile terminal or a client terminal. The subscriber provisioning profile contains the mobile terminal subscriber's preferences with regard to the data items, and the data items are formatted for display according to the mobile terminal subscriber's provisioning profile. The formatted data items are transmitted to the mobile terminal subscriber's terminal for viewing by the subscriber.

## Description

### CROSS-REFERENCES TO RELATED APPLICATIONS

This application is an application filed under 35 U.S.C. § 111(a), claiming benefit pursuant to 35 U.S.C. § 120 of the filing date of the Provisional Application Serial No. 60/227,852 filed on August 25, 2000, pursuant to 35 U.S.C. § 111(b). The Provisional Application Serial No. 60/227,852 is incorporated herein by reference for all it discloses.

### BACKGROUND OF THE INVENTION

### 1. Technical Field of the Invention

The present invention is directed to a method and apparatus for wireless communications. More particularly, the present invention integrates mobile data services and content sources (e.g., the Internet, Intranets and other content providers) together and aggregates information from those sources in a personalized format. The present invention aggregates personalized information and services as requested by the subscriber, and allows the subscriber to access the aggregated content without requiring conventional menus typically associated with mobile applications.

### 2. Description of the Related Art

Currently, there are several mobile portal products available in the marketplace, such as MyPhone, Portal2Go and Zed Sonera. However, the above-mentioned mobile portal products have drawbacks that limit their usefulness.

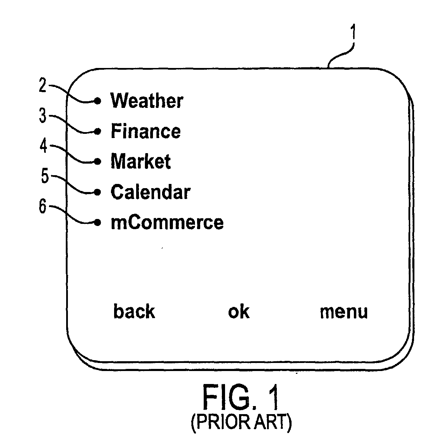

Typically, all mobile portals provide a "pull" menu-driven user interface that requires many clicks in order for a subscriber to reach relevant information. Referring to FIG. 1, a conventional mobile portal home page 1 is illustrated. A series of links to the current weather (Weather 2), the subscriber's bank (Finance 3), the stock market (Market 4), the subscriber's monthly calendar (Calendar 5) and locally available commerce (mCommerce 6) are depicted. In order for the subscriber to find a specific item of information that is of interest such as a current bank balance with this conventional mobile portal, the subscriber follows a series of links (e.g., finance→ MyBankName→ accounts→ checking→ balance→ balance is $1000). In general, the current mobile portals do not provide a direct link to specific items located on application web sites or application servers.

In addition, conventional mobile portals do not dynamically present mobile terminal home pages. Dynamic presentation allows a subscriber to determine the order of presentation of information on the mobile terminal home page, and to set conditions for the display or removal of information from the mobile terminal home page. The requested information is refreshed on the mobile terminal display according to the conditions set by subscriber, without any subscriber intervention other than the initial selection of desired information and setting the conditions for displaying the desired information. The subscriber avoids having to follow a series of links to retrieve desired information. In addition, dynamic presentation reorders data items displayed on the mobile terminal based upon the characteristics of the data item, and allows the deletion of data items based upon a profile assigned to each data item. The mobile portals that have provisioning capabilities that allow the addition and/or deletion of applications and/or links to a portal do not provide for dynamic presentation of the information presented to the subscriber.

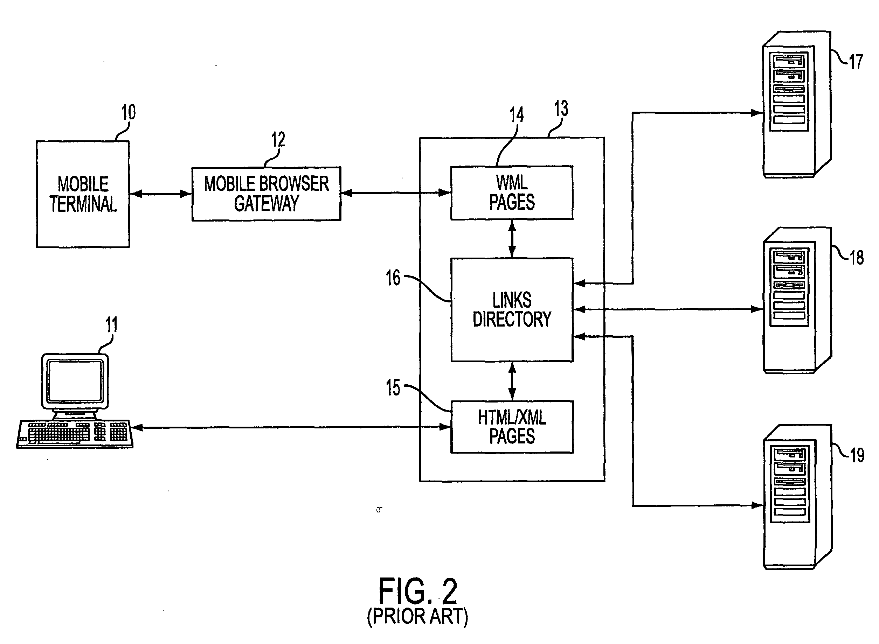

Referring to FIG. 2, a conventional mobile portal server 13 is illustrated. A subscriber uses a mobile terminal 10 to interface with the conventional mobile portal server 13 indirectly through a mobile browser gateway 12. The mobile browser gateway 12 is connected to the conventional mobile portal server 13 and the subscriber can view WML pages 14 stored thereon via the mobile terminal 10, and select the links embedded in the WML pages 14. Alternatively, a subscriber using a client terminal 11 (a personal computer or other computing equipment) can connect to the conventional mobile portal server 13 and view HTML/XML pages 15 stored thereon via the client terminal 11, and select the links embedded in the HTML/XML pages 15. The conventional mobile portal server 13 does not directly interface with or execute the applications resident on the applications servers 17-19 that are reachable from the conventional mobile portal server 13. Instead, the conventional mobile portal server 13 provides a links directory 16 comprising links (e.g., HTML, etc.) that point to the applications resident on the applications servers 17-19. Regardless of whether the subscriber uses a client terminal 11 or a mobile terminal 10, information is only retrieved after the subscriber has followed a series of links.

### SUMMARY OF THE INVENTION

The present invention has been made in view of the above circumstances and to overcome the above problems and limitations of the prior art. Additional aspects and advantages of the present invention will be set forth in part in the description that follows and in part will be obvious from the description, or may be learned by practice of the present invention. The aspects and advantages of the present invention may be realized and attained by means of the instrumentalities and combinations particularly pointed out in the appended claims.

According to a first aspect of the present invention, a method for aggregating content for transmittal to a terminal subscriber is provided. The method comprises receiving data items from one or more content providers and selecting data items from the provided data items according to a provisioning profile that is associated with the terminal subscriber. The method further comprises formatting the data items for each terminal subscriber according to the provisioning profile associated with each terminal subscriber.

According to a second aspect of the present invention, an executable program for a computer system for aggregating content for transmittal to a terminal subscriber is provided. The executable program comprises a first executable code portion which, when executed on a computer system, receives data items from one or more content providers. The executable program further comprises a second executable code portion which, when executed on a computer system, selects data items from the provided data items according to a provisioning profile associated with the terminal subscribers. The executable program further comprises a third executable code portion which, when executed on a computer system, formats the data items according to the provisioning profiles associated with the terminal subscribers.

According to a third aspect of the present invention, an apparatus for aggregating content to be transmitted to a terminal subscriber is provided. The apparatus comprises a data receiver that receives data items from one or more content providers. The apparatus further comprises a data discriminator that selects data items from the provided data items according to provisioning profiles associated with each terminal subscriber. The apparatus further comprises a controller that formats the data items according to provisioning profile associated with each terminal subscriber.

According to a fourth aspect of the present invention, an apparatus that aggregates content to be transmitted to a terminal subscriber is provided. The apparatus comprises a database server that stores provisioning profiles for the terminal subscribers, and a control server that receives data items from one or more outside applications and adapts the data items into formatted data items for transmission to mobile terminals or client terminals associated with terminal subscribers. The control server adapts the data items according to a provisioning profile for each terminal subscriber stored on the database server. The apparatus further comprises a web server that transmits the formatted data items to the mobile/client terminals. The web server also transfers commands from the mobile/client terminals to the control server.

According to a fifth aspect of the present invention, a mobile portal server that aggregates content to be transmitted to a terminal subscriber is provided. The mobile portal server comprises a subscriber database that stores a provisioning profile for the terminal subscribers, and an applications interface processor that receives data items from one or more outside applications and adapts the data items into formatted data items for transmission to mobile terminals or client terminals associated with the terminal subscribers. The data items are formatted according to a provisioning profile stored on the subscriber database. The mobile portal server further comprises a web server that provides access to the formatted data items, and a control processor connected to the applications interface processor, the subscriber database and the web server.

According to a sixth aspect of the present invention, a method for dynamically updating one or more data items sent to a terminal subscriber from a mobile portal server is provided. The method comprises the selection of one of the data items, and editing the profile of the selected data item. The method further comprises sending the edited profile of the data item to the mobile portal server, and receiving a plurality of updated data items from the mobile portal server.

According to a seventh aspect of the present invention, an executable program for a computer-driven mobile terminal for dynamically updating data items sent to a mobile terminal subscriber from a mobile portal server is provided. The executable program comprises a first executable code portion which, when executed on a computer-driven mobile terminal, selects one data item. The executable program further comprises a second executable code portion which, when executed on a computer-driven mobile terminal, edits the profile of the selected data item. The executable program further comprises a third executable code portion which, when executed on a computer-driven mobile terminal, sends the edited profile of the data item to the mobile portal server. The executable program further comprises a fourth executable code portion which, when executed on a computer-driven mobile terminal, receives a plurality of updated data items from the mobile portal server.

### BRIEF DESCRIPTION OF THE DRAWINGS

The accompanying drawings, which are incorporated in and constitute a part of this specification illustrate aspects of the present invention and, together with the written description, serve to explain the aspects of the present invention. In the drawings:
FIG. 1 illustrates a conventional mobile portal home page according to the prior art;
FIG. 2 illustrates a conventional mobile portal server according to the prior art;
FIG. 3 illustrates a mobile portal server according to an aspect of the present invention;
FIG. 4 illustrates a more detailed view of the mobile portal server according to an aspect of the present invention;
FIG. 5 illustrates a mobile portal home page according to an aspect of the present invention;
FIG. 6 illustrates a generic action menu according to an aspect of the present invention;
FIG. 7 illustrates another mobile portal home page according to an aspect of the present invention;
FIG. 8 illustrates mobile portal page according to an aspect of the present invention that displays a data item that is associated with detailed text and an application-specific action menu;
FIG. 9 illustrates an exemplary process flow for setting the provisioning profile for a data item according to an aspect of the present invention;
FIGS. 10A-10C illustrate an exemplary process flow for updating and transmitting data items to a subscriber according to an aspect of the invention; and
FIG. 11 illustrates an exemplary process flow wherein a specific application identifies that it has new information for display to the subscriber.

### DETAILED DESCRIPTION OF THE INVENTION

Prior to describing the aspects of the present invention, some details concerning the terms of art will be provided to facilitate the reader's understanding of the present invention and to set forth the meaning of various terms. A glossary of terms is included to facilitate the understanding of the present invention.

As used herein, the acronym HTML means HyperText Markup Language. Typically, HTML is associated with the document format used on the World Wide Web. Please note that HTML can also be used to dynamically generate a web page display as well. Web pages are built with HTML tags, or codes, embedded in the text. HTML defines the page layout, fonts and graphic elements as well as the hypertext links to other documents on the Web. Each link contains the URL, or address, of a Web page residing on the same server or any server worldwide.

As used herein, the acronym c-HTML means Compact HTML. This is a form of HTML used for the I-mode wireless Internet service currently being offered in Japan.

As used herein, the acronym SMS means Short Message Service. This service allows short messages to be sent over the air between base stations and pagers, cellular telephones and other handheld wireless devices. Currently, alphanumeric messages up to 160 characters are supported.

As used herein, the acronym SMSC means Short Message Service Center. This is a service center that handles SMS traffic.

As used herein, the acronym SMSC Interface means Short Message Service Center Interface. This is an interface to a service that allows a system to send a short alphanumeric message (typically up to 160 characters) via a cellular radio channel. Such an interface was pioneered by GSM operators and is today having phenomenal success in Europe. It is now also available on non-GSM systems such as TDMA and CDMA.

As used herein, the acronym WAP means Wireless Application Protocol. This is an architecture for accessing Internet applications via a small screen wireless device. It specifies a document format (WML) and a stack of protocols (WTP, WTLS) that can "run" on top of many cellular bearers (e.g. SMS, USSD, CSD, GPRS). This stack replaces the traditional TCP/IP stack used in the Internet. The architecture includes a WAP gateway that mediates between the Internet and the wireless network. The WAP gateway translates the Internet protocol stack to WAP protocol stack. The WAP gateway does not translate HTML to WML. The application server in the Internet is expected to support WML pages.

As used herein, the acronym WML means Wireless Markup Language. This language is part of the WAP architecture. It describes the document format that is used by Internet servers to communicate data to small screen wireless devices.

As used herein, the acronym STK refers to a software tool kit for building application client onto a SIM (Subscriber Identity Module) card, which is a small card that includes a microprocessor and memory chip that is associated with a specific subscriber. The STK typically comprises an Application Programming Interface (API), development software (e.g., compilation, debugging and emulation software) and documentation. This interface uses a SIM (Subscriber Identity Module) card, and when the subscriber inserts the SIM card into a mobile terminal (e.g., a cellular telephone), the mobile terminal is identified by the system as the subscriber's mobile terminal. Furthermore, if the subscriber takes the SIM card out of the first mobile terminal and inserts it into a second mobile terminal, the first mobile terminal ceases to be identified with the subscriber, and the second mobile terminal is identified as the subscriber's mobile terminal. Furthermore, the subscriber need not change any numbers, identifying information, services, etc., when the SIM card is inserted into the second mobile terminal. GSM networks first used the SIM concept but other types of networks are adapting the concept as well.

As used herein, the acronym IVR Interface means Interactive Voice Response Interface. An IVR Interface comprises a series of prompts used by an application to query a subscriber for answers to specific questions. The subscriber responds by pressing one or more buttons on the mobile terminal (sending DTMFs or tones that are decoded by the application in order to understand the subscriber's answers). However, in some implementations, the subscriber may respond with normal speech that the IVR Interface recognizes via automatic speech recognition techniques. Then, the IVR Interface receives and processes the answer and may ask another question based on the previous answer.

As used herein, the acronym UM means Unified Messaging. This concept provides a single mailbox for several types of messaging services, such as e-mail, voice and fax messages.

As used herein, the acronym XML means Extensible Markup Language. This language standard is an open standard for describing data from the World Wide Web Consortium. XML is used for defining data elements on a Web page and business-to-business documents. XML uses a similar tag structure as HTML. However, whereas HTML defines how elements are displayed, XML defines what those elements contain.

As used herein, the acronym COS means Class Of Service. Simply put, different subscribers have the ability to contract for different levels of service (basic, enhanced, premium, etc.).

As used herein, the term "computer system" encompasses the widest possible meaning and comprises, but is not limited to, standalone processors, networked processors, mainframe processors, and processors in a client/server relationship. The term "computer system" is to be understood to comprise at least a memory and a processor. In general, the memory will store, at one time or another, at least portions of executable program code and the processor will execute one or more of the instructions comprising that executable program code. Executable program code includes, but is not limited to, object code and machine code.

As used herein, the term "embedded computer system" comprises, but is not limited to, an embedded central processor and memory bearing object code instructions. Examples of embedded computer systems comprise, but are not limited to, personal digital assistants, cellular phones and digital cameras. In general, any device or appliance that uses a central processor, no matter how primitive, to control its functions can be labeled as having an embedded computer system. The embedded central processor will execute one or more of the object code instructions that are stored on the memory. The embedded computer system can comprise cache memory, input/output devices and other peripherals.

The term "predetermined operations" includes, but is not limited to, "computer system software." It is not necessary to the practice of this invention that the memory and the processor be physically located in the same place. That is to say, it is foreseen that the processor and the memory might be in different physical pieces of equipment or even in geographically distinct locations.

As used herein, one of skill in the art will appreciate that "media" or "computer-readable media" may comprise a diskette, a tape, a compact disc, an integrated circuit, a cartridge, a remote transmission via a communications circuit, or any other similar medium useable by computers. For example, to distribute computer system software, the supplier might provide a diskette or might transmit the instructions for performing predetermined operations in some form via satellite transmission, via a direct telephone link, or via the Internet.

Although computer system software might be "written on" a diskette, "stored in" an integrated circuit, or "carried over" a communications circuit, it will be appreciated that, for the purposes of this discussion, the computer usable medium will be referred to as "bearing" the instructions for performing predetermined operations. Thus, the term "bearing" is intended to encompass the above and all equivalent ways in which instructions for performing predetermined operations are associated with a computer usable medium.

Therefore, as used herein, the term "program product" refers to a computer useable medium, as defined above, that bears instructions for performing predetermined operations in any form.

A detailed description of the aspects of the invention will now be given referring to the accompanying drawings.

The present invention provides selected information in a personalized format as requested by the subscriber, and the personalized format is dynamically updated according to presentation rules (described below) and profiles set by the subscriber. The present invention provides the subscriber with much easier and immediate access to desired information through aggregation of information from applications according to the presentation rules. The present invention allows the subscriber to use a conventional pull menu driven user interface as well.

Dynamic presentation allows a subscriber to determine the order of presentation of information on the mobile terminal home page, and to set conditions for the display or removal of information from the mobile terminal home page. The requested information is refreshed on the mobile terminal display according to the conditions set by subscriber, without any subscriber intervention other than the initial selection of desired information and setting the conditions for displaying the desired information. The subscriber avoids having to follow a series of links to retrieve desired information. In addition, dynamic presentation reorders data items displayed on the mobile terminal based upon the characteristics of the data item, such as, but not limited to, the application associated with the data item, the priority value assigned to the data item, and the time of display for the data item. Moreover, dynamic presentation provides for the deletion of data items based upon a profile assigned to each data item.

The present invention provides mobile portal products that present personalized push pages to the subscriber. Moreover, the subscriber uses the presentation rules to set up a profile for displaying the personalized push pages. The present invention enables easier and more immediate access to desired information, and aggregates information (i.e., data items) from outside applications according to the presentation rules. The subscriber's selection of data items provided by various outside applications is referred to as "provisioning" and a subscriber sets up a "provisioning profile" that aggregates the data items for display on a mobile terminal or a client terminal. For example, the subscriber may want the data items to be presented according to subjects of interest, contact person, priority, etc. The data items can be provided by outside applications selected by the subscriber, or the operator of the mobile portal can provide data items through third party content providers. In all cases, however, the present invention does not prevent the subscriber from using a conventional pull menu driven user interface.

Referring to FIG. 2, a mobile terminal 10 interfaces with a conventional mobile portal server 13 via mobile browser gateway 12. As described earlier, there is no interface to the application servers. Instead, the conventional mobile portal server 13 provides a links directory 16 to different applications. All information has to be "pulled" from the mobile portal server.

### 1. Overview of the Mobile Portal Server

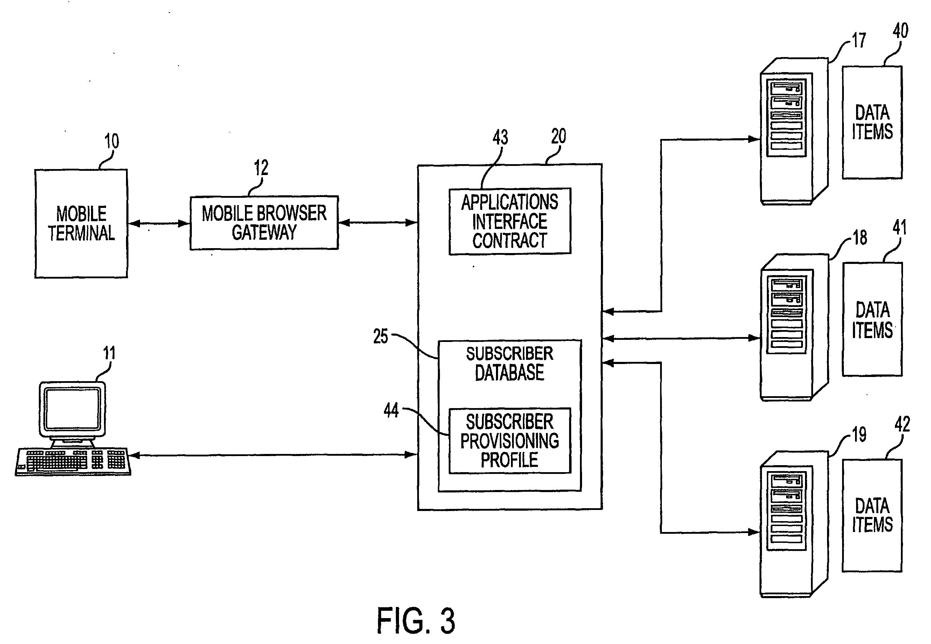

Referring to FIG. 3, the mobile portal server 20 according to an aspect of the present invention is illustrated. The mobile portal server 20 includes the functionality described earlier for conventional mobile portal servers. The mobile portal server 20 links outside applications executing on outside application servers 17-19 to the subscriber. The outside applications push data items 40-42 to the mobile portal server 20, and the mobile portal server 20 pushes these data items to the mobile terminal 10 or the client terminal 11 of the subscriber. The mobile portal server 20 according to the present invention is not limited to an interface with existing mobile browser gateways but can interface with any other router or gateway that may be required in the future between the Internet and the subscriber. The mobile portal server 20, and any remote terminal used as part of the service, may operate in a multitude of communication modes (e.g., GSM, TDMA, CDMA, 2.5G modes (e.g., GPRS, EDGE, HSCSD, i-Mode), and 3G modes (e.g., Wideband CDMA and CDMA2000)). Thus, the present invention is not limited to an interface to a web server and WAP gateway, but it also supports other communication modes, and will support the interfaces required by the specific application servers.

The mobile portal server 20 interfaces with the outside applications in the following manner. Each of the outside applications defines a set of data items 40-42 that it can provide to the mobile portal server 20, i.e., the type and/or amount of information that the outside application can provide to the mobile portal server 20. This is referred to as an applications interface contract 43. Preferably, the applications interface contract 43 is an XML document that defines the exchange of data between an outside application and the mobile portal server 20. For example, the applications interface contract 43 defines (1) the format of potential data items provided by the outside application; (2) the message format by which the mobile portal server 20 notifies the outside application of the data items that a specific subscriber would like to receive; and (3) the message format that the outside application uses to push the data items requested by the subscriber to the mobile portal server 20. In short, the applications interface contract 43 delineates the format of messages exchanged by the mobile portal server 20 and outside applications.

For example, a financial services application executing on an applications server at a brokerage house could provide data items regarding the current value of a brokerage account, stock prices, bond prices, interest rates, currency exchange information and other financial information. If a subscriber was interested in receiving certain data items from the set of data items provided by the financial services application, those selected data items are entered into the subscriber's provisioning profile 44, which is stored on the subscriber database 25. Of course, the subscriber's provisioning profile 44 can include requests for data items from a variety of outside applications servers 17-19 (e.g., world news items, sports news, weather updates, personal email server, personal calendar, etc.). There is no limitation on the variety or type of data items that can be listed in a subscriber provisioning profile 44.

Each data item listed in a subscriber provisioning profile has its own individual profile. Each data item that is displayed on the mobile portal home page has a display line assigned to it (i.e., which line of the mobile portal home page will the data item be assigned), and each data item can be assigned a priority level (high, medium, low, none). Each data item may also have a notification alert assigned to it as well. For example, if a stock that the subscriber holds reaches a certain price threshold, the subscriber will be notified by sound or flashing of a symbol on the mobile terminal display screen, or receive an SMS.

The profile for each data item in the subscriber provisioning profile includes presentation rules (i.e., show and delete) associated with the data item. The show rules relate to time, event or location. The show rules include, but are not limited to, showing a data item for a specific time, showing a data item for a specific event, and showing a data item based on a particular location. For example, a data item that relates to a particular stock will only appear if the stock has exceeded a value predetermined by the subscriber. Another example is a weather forecast that appears after 8:00 AM. The delete rules include, but are not limited to, deleting a data item after a specific time, deleting a data item after a specified number of hours has passed, deleting a data item after a specified event has occurred or deleting a data item after the subscriber has read the data item. It is important to note that both the show and delete rules have default settings that are application-specific. That is, each outside application is assigned default settings for the show and delete rules, and the subscriber has the ability to change the default rule settings when provisioning a data item. For example, a subscriber adds a weather data item to his mobile portal home page and the default delete rule for this particular data item states that the data item will be deleted two hours after it is sent to the user. When provisioning this data item, the subscriber chooses not to change the delete rule from its default setting. Thus, two hours after the subscriber receives the weather data item, it is deleted according to the default delete rule. This example is for illustrative purposes only and is not meant to limit the present invention in any way.

### 2. Mobile Portal Server

Referring to FIG. 3, the mobile portal server 20 uses the subscriber provisioning profile 44 to provide the outside applications with a list of data items requested by the subscriber. The subscriber provisioning profile 44 is transmitted to the outside application servers 17-19 via data links. The data links can use any one of a number of data transmission protocols, e.g., XML/HTTP. Upon receipt of the subscriber provisioning profile 44, each outside applications server 17-19 determines which of the requested data items on the subscriber provisioning profile 44 it can supply.

For example, using the financial service example described above, one of the potential data items that the financial service application could provide is the current interest rate of U.S. Treasury Bills. If the subscriber adds that data item as a requested data item in his/her subscriber provisioning profile 44, then that data item will be transmitted over the data link from the financial service application to the mobile portal server 20. The financial service application updates the requested data item based upon the provisioning profile forwarded to the outside application when the data item was provisioned (see below). The mobile portal server 20 transmits the data item to the mobile terminal 10. The transmitted data item is displayed and updated according to rules in the subscriber provisioning profile 44 (a more detailed description of updating a data item and the presentation rules in the subscriber provisioning profile 44 is described below). The process of selection of data items from outside applications servers 17-19, storing the selection of data items in a subscriber provisioning profile 44, and using the subscriber provisioning profile 44 to sort through data items pushed from an outside applications server and push data items to a mobile terminal 10 is repeated for each individual subscriber.

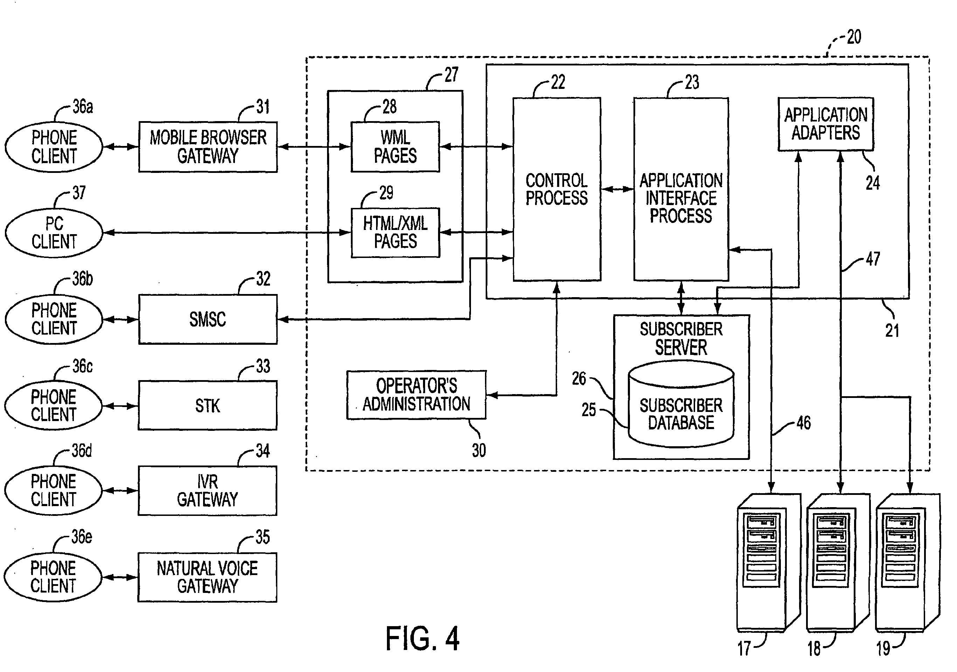

Referring to FIG. 4, another aspect of the present invention is illustrated. The mobile portal server 20 comprises a control server 21, a web server 27, a subscriber server 26 and an operator administration 30. The mobile portal server 20 transfers requested data items from the outside applications to the mobile terminals 36a-36e and the client terminal 37. The control server 21, the web server 27, the subscriber server 26 and the operator administration 30 can reside in the same machine, can be separate machines, or a combination thereof. For purposes of clarity of illustration, four separate entities will be described.

Wireless communication with a subscriber's mobile terminal (e.g., cellular terminal, portable digital assistant, handheld computer, etc.) is realized using WML (e.g., via WML pages 28) or any other markup language that is currently used or might be used in the future. For wired communications, HTML (for Web terminals) content (e.g., HTML/XML pages 29) is transmitted over a standard HTTP connection, or other types of connections. In addition, subscriber notifications are sent as Short Messages via a SMSC 32. This communications protocol can be used when the subscriber must be notified of a recent change in a data item. Any communications protocol may be used, such as SMSC and outdial call.

The web server 27 manages the mobile portal presentation for browser-based clients (including, but not limited to, web, WAP, cHTML, sHTML, XML, voice browser technologies and others). The web server 27 manages the WML pages 28 that are accessed through mobile browser gateway 31 by a subscriber using a mobile terminal 36a. Any subscriber selections or commands received through the mobile browser gateway 31 (based on the WML pages 28) are transmitted to control process 22 from the web server 27. The web server 27 also manages the HTML/XML pages 29 that are accessed by a subscriber using a client terminal 37. Any subscriber selections or commands received at the web server 27 from the client terminal 37 (based on the HTML/XML pages 29) are transmitted to control process 22 of the control server 21. The control process 22 of the control server 21 updates the WML pages 28 and the HTML/XML pages 29. In addition, the control process 22 creates the WML pages 28 and the HTML/XML pages 29 according to the subscriber provisioning profile 44 stored on the subscriber database 25.

The subscriber database 25 stores the subscriber provisioning profile 44 for each subscriber of the mobile portal server 20. The subscriber database 25 is comprised of subscriber provisioning profiles for each stored subscriber. In addition, the subscriber database 25 includes data items displayed on mobile portal home pages. The control process 22 and the application interface process 23 of the control server 21 access the subscriber provisioning profiles stored on the subscriber database 25. If a subscriber desires to change his/her subscriber provisioning profile 44, the control process 22 of the control server 21 retrieves the subscriber provisioning profile 44 from the subscriber database 25, and updates the subscriber provisioning profile 44 as requested. The updated subscriber provisioning profile 44 is then stored back on the subscriber database 25. In addition, the application interface process 23 retrieves subscriber provisioning profiles in order to aggregate data items received from the outside applications for presentation on a mobile terminal, according to the subscriber provisioning profile 44.

The control server 21 includes the control process 22, the application interface process 23 and the application adapter process 24. The control server 21 also supports an administration process 30 that transmits new or updated subscriber definitions to the control process 22. For example, after entry of new subscriber data using the administration process 30, the new subscriber data is transmitted to the control process 22. The control process 22 transmits the new subscriber data to the subscriber database 25 for storage. Likewise, through the administration process 30 interfacing with the control process 22, the subscriber provisioning profile 44 of a current subscriber can be retrieved from the subscriber database 25, updated as appropriate, and returned to the subscriber database 25.

The control process 22 manages the interaction between the administration process 30, the application interface process 23, the subscriber database 25 and the web server 27. In addition, the control process 22 communicates with the SMSC 32. The control process 22 communicates updated mobile portal home pages to subscribers, supports subscriber manipulations of the data items (e.g. forward, keep, etc.) displayed on their respective mobile portal home pages, and enables a subscriber to modify his/her mobile portal home page (i.e., self-provisioning). The subscriber can request that the control process 22 update the subscriber's mobile portal home page (e.g., by changing the provisioning profile). In addition, when outside applications update data items identified in the subscriber's provisioning profile 44 for display, the control process 22 updates the subscriber's mobile portal home page accordingly. For each subscriber, the control process 22 creates an up-to-date list of data items to be presented on the subscriber's mobile portal home page. The control process 22 then builds the appropriate presentation for the mobile portal home page (i.e., Web, WAP, cHTML, etc.). The updated mobile portal home page is then transmitted to the web server 27. If the subscriber is using a mobile terminal, the updated mobile portal home page is accessed through the mobile browser gateway 31. If the subscriber is using a client terminal 37, the updated mobile portal home page is accessed through the HTML/XML pages 29.

The control process 22 also supports subscriber manipulations. For a content item that has a specific action menu associated with it, when the subscriber selects the content item, the subscriber will view the detailed data attached to the content item (associating a content item with a generic menu or a specific action menu will be described below). In addition, the subscriber will receive a list of specific actions as proscribed by the outside applications. The control process 22 builds a screen of content items to present to the subscriber using the data items transmitted (i.e., pushed) from the outside applications. Should the subscriber select one of the specific actions associated with a content item, the control process 22 transmits the selected action to an application link that actually handles the selected action (e.g., sell a particular stock) without any further involvement from the control process 22.

If a generic menu is associated with the selected content item, the control process 22 presents the identical set of generic actions to the subscriber. Recall that the subscriber interfaces with the control process 22 through the WML pages 28 or the HTML/XML pages 29 located on the web server 27. At a minimum, the control process 22 supports the following generic actions:
1. Forward - the subscriber selects this action to forward a content item to a name entered in a personal address book or entered from the mobile terminal.
2. Keep, Delete - the subscriber selects one of these actions to temporarily remove a content item from the mobile portal home page (delete), or to keep it there (keep).
3. Push to Top, Remove, Modify this Line - the subscriber selects one of these actions to permanently modify the appearance (i.e., content item positioning) of the mobile portal home page.
4. Voice - the subscriber selects this action to execute a text to speech conversion of the content item's text.
5. Go to Application - The subscriber selects this action to execute an outside application.
6. Go to Home Page - The subscriber selects this action to return to the mobile portal home page.
The foregoing list of generic actions is exemplary in nature and should not be interpreted as limiting in any way.

Outside applications interface with the mobile portal server 20 via the application interface process 23 according to the applications interface contract 43 (see above). An application adapter 24 (described below) may be required for the application interface process 23 to properly communicate with the outside applications.

The application interface process 23 manages the interaction with the outside applications according the applications interface contract 43. As described above, each outside application uses the applications interface contract 43 to delineate the data items that an outside application will supply to the mobile portal server 20. Referring to FIG. 4, two data links 46,47 comprise separate pathways for the data items from the outside applications servers 17-19 to reach the application interface process 23. If an outside application is able to adhere to the applications interface contract 43, the data items are directly transmitted to the application interface process 23 via data link 46. When an outside application cannot adhere to the applications interface contract 43, the data items are transmitted to the mobile portal server 20 via a second data link 47. Application adapter 24 handles the interaction between the outside applications and the application interface process 23.

The applications interface contract 43 supports how a subscriber does provisioning, as well as subscriber access to the service. For provisioning, the present invention provides the subscriber with all the available data items from all the outside applications. The subscriber selects the desired data items from the available data items, and configures a set of presentation rules to control the behavior of the desired data items (i.e., show rules, delete rules and priority). The present invention stores this subscriber data in the subscriber database 25 as a subscriber provisioning profile 44.

The application interface process 23 also transmits the subscriber provisioning profile 44 to the outside applications according to the applications interface contract 43. The mobile portal server 20 sends the relevant portion of the subscriber provisioning profile 44 (i.e., an application-subscriber profile) to the outside application. For example, if the subscriber wants a stock update to be shown when the stock changes by more than 5% (show rule), the mobile portal server 20 will report to the stock application that this subscriber desires to have stock update, and that the trigger for pushing the relevant information to the mobile portal server is a > 5% change in the stock price. The mobile portal server 20 does not have to tell the outside application about any of the presentation rules, since it is the mobile portal server that handles the presentation rules. The outside applications store the transmitted subscriber provisioning profile 44 (i.e., the application-subscriber profile) in their own databases, separate and apart from the subscriber database 25.

The outside applications push new data items to the mobile portal server 20 in accordance with the application-subscriber profile stored in databases created, maintained and accessed by the outside applications (not shown). The data items include short text messages to be presented on the mobile portal home page, detailed text and specific actions associated with the data items. When the subscriber selects a data item, the mobile portal server 20 will transmit an updated display (through the WML pages 28 or the HTML/XML pages 29) containing detailed text and the specific actions (if any are associated with the data item).

As noted above, the present invention can further comprise an application adapter 24 to handle an outside application that can push desired data items, but not according to the applications interface contract 43. The generic push adapter translates push data items that arrive from the outside application to the push format defined by the applications interface contract 43. For example, an application that pushes data items over SMS or email, and the adapter extracts the data item's short text, detailed text and specific actions from the SMS or email.

The mobile portal server 20 can further comprise STK interface 33 connected to the control server 21. As described above, the STK interface 33 can be used to program a SIM with an application to be used on the mobile terminal. Applications can be entirely defined by the operator and additional menus can be installed on the mobile terminal by the SIM.

The mobile portal server 20 can further comprise an IVR gateway 34 connected to the control server 21. As described earlier, the IVR gateway 34 uses a series of prompts to query the subscriber for answers to specific questions. The subscriber responds by pressing one or more buttons on the mobile terminal (sending DTMFs or tones that are decoded by an application in order to understand the subscriber's answers). The IVR gateway 34 can be used for accessing the mobile portal server 20 and for setting up a subscriber provisioning profile 44.

The mobile portal server 20 can further comprise a natural voice gateway 35 connected to the control server 21. The natural voice gateway 35 provides to subscribers a Voice User Interface (VUI) driven by natural language enhanced speech recognition. The natural voice gateway 35 can be used for accessing the mobile portal server 20 and for setting up a subscriber provisioning profile 44.

### 3. Mobile Portal Home Page

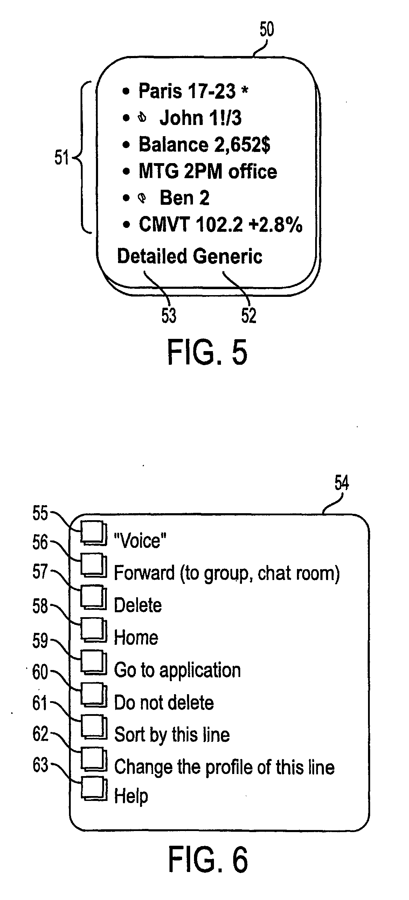

Referring to FIG. 5, a mobile portal home page 50 will now be described in greater detail. The mobile portal home page 50 comprises data items 51, a generic menu selector 52 and a detailed menu selector 53. Alternatively, the generic menu selector 52 may not appear on the mobile portal home page 50, but, due to mobile terminal limitations, only appear on the mobile portal home page 50 after the detailed menu selector 53 is selected. This mobile portal home page is exemplary in nature and is by no means comprehensive, and other mobile portal home page layouts are not excluded in any manner.

In the exemplary mobile portal home page illustrated in FIG. 5, the subscriber is provided with the data item "Balance $2,652" without having to click through a series links to acquire that information from a financial institution. Rather, the present invention (i.e., the control process 22, application interface process 23, subscriber provisioning profile 44, etc.) provides that information to the subscriber's mobile terminal or client terminal due to a previously set up subscriber provisioning profile 44. More information in the form of detailed text and an application-specific action menu is available for each of the data items. To select the generic menu 54 illustrated in FIG. 6, the subscriber selects the generic menu selector 52 on the mobile portal home page 50. To select a detailed text and an application-specific action menu, the subscriber selects the detailed menu selector 53 on the mobile portal home page 50.

Once the subscriber receives the relevant information (i.e., data item), the subscriber can just read it and delete it manually. The present invention can also be configured such that data items can be automatically deleted (i.e., presentation rules).

As described above, the subscriber can also activate a generic action menu or an application-specific action menu. Referring to FIG. 6, a generic action menu 54 according to the present invention is illustrated. The generic action menu 54 comprises menu selections such as voice selection 55, forward selection 56 (forward a data item to a name entered in a personal address book or entered from the mobile terminal), delete selection 57 (temporarily delete an item from the mobile portal home page), home selection 58, go to application selection 59, do not delete selection 60 (temporarily keeps a data item on the mobile portal home page when its profile says it should be deleted), sort by this line selection 61, change profile selection 62 and help selection 63. The generic action menu 54 provides a set of actions that are common to each data item available on the mobile portal home page 50. For example, the voice selection 55 enables the subscriber to have the data item read back. The sort by line selection 61 allows the subscriber to change the display position of selected data items on the mobile display terminal. The change profile selection 62 allows the subscriber to change the profile of selected data items (the profile of a data item will be described in greater detail below). The home selection 58 takes the subscriber back to the mobile portal home page. This list is exemplary in nature and is by no means comprehensive, and other generic action menu entries are not excluded in any way.

The control process 22 also supports subscriber menu selections from a mobile terminal or a client terminal. For a data item that is associated with an application-specific action menu, when the subscriber selects the data item, the subscriber views the detailed data attached to the data item. In addition, the subscriber will receive a list of specific actions as proscribed by the outside application that is associated with the selected data item. When the subscriber selects one of the specific actions associated with the data item, the control process 22 transmits the selected action to the outside application associated with the selected data item, and that outside application handles the selected action (e.g., sell a particular stock) without any further involvement from the control process 22.

If a generic action menu is associated with the selected data item, the control process 22 presents the identical set of generic actions to the subscriber. Recall that the subscriber interfaces with the control process 22 through the WML pages 28 or the HTML/XML pages 29 located on the web server 27.

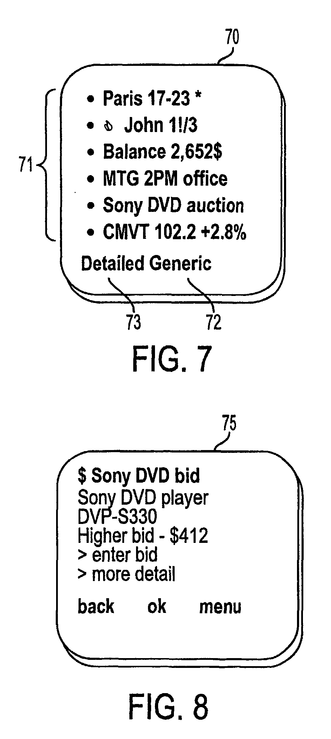

Referring to FIG. 7, another mobile portal home page 70 will now be described in greater detail with respect to detailed menu selectors. The mobile portal home page 70 comprises data items 71, a generic menu selector 72 and a detailed menu selector 53. The mobile portal home page now has a data item entitled "Sony DVD auction" that the subscriber can select. If the subscriber selects the detailed menu selector 53 for the "Sony DVD auction" menu item, the mobile portal home page 70 will now display the text as shown in FIG. 8. Referring to FIG. 8, a mobile portal page 75 with the "Sony DVD auction" data item describing the bidding for DVD player with a description of the item and the current bid for the item is illustrated. The data item is shown in greater detail so the subscriber knows the item that is currently up for bid and current bidding level. As shown in FIG. 8, the subscriber is provided with links to find more detail about the product or to enter a bid for the item. Of course, the skilled artisan could arrange the detailed information on the mobile portal page 75 in a variety of ways.

The sorting of data items on a mobile portal home page according to the present invention is based on three criteria: application type, priority and time. The rules and sorting capabilities actually provide a unique dynamic data item presentation, since the presentation can be changed in real time at any point via the generic action menus. Any one of a number of conventional sorting methods can be used to sort the data items based on the above three criteria. In addition, the the sorting criteria is not limited to the three criteria described above (i.e., application type, priority and time). Other criteria, such as the type of information contained within the data item, can be implemented as well.

### 4. Data Item Provisioning

The present invention provides at least four levels of provisioning for the subscriber: basic provisioning, self-provisioning, on-the-fly provisioning and self-learning provisioning. The present invention delivers data according to the subscriber provisioning preferences (i.e., the subscriber provisioning profile 44) according to these provisioning preferences.

The basic provisioning feature uses service packages of data items, with the provisioning rules for each data item being set to defaults. Examples of service packages are messaging (e.g., voice mail, e-mail, fax and SMS), messaging plus information items (such as news, sports, events, horoscope, weather, etc.), and messaging plus information items and financial services. This service package list is exemplary in nature and is by no means limiting.

The self-provisioning feature is available through various channels (e.g., web, call center, WAP, voice, etc.). Self-provisioning allows the subscriber to select which outside applications to interface with and what data items to extract from those outside applications. As described earlier, data items are supplied from the outside applications according to the applications interface contract 43. For each data item that is self-provisioned, the self-provisioning feature allows the subscriber to set the presentation rules (i.e., show, delete and priority (described below)), as well as the order of appearance on the mobile portal home page on the subscriber's mobile terminal. Self-provisioning enables the modification of the default provisioning set by the operator according to Class Of Service selected by the subscriber or initially defined via the calling center.

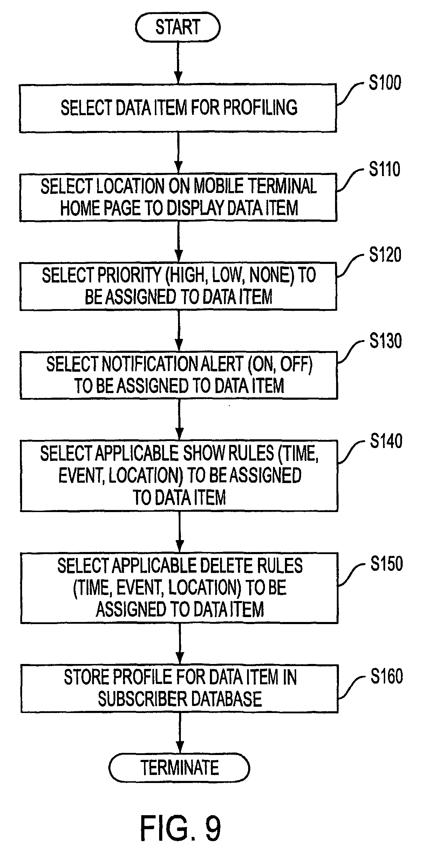

The on-the-fly provisioning feature allows a data item to be added to the mobile portal home page, much like adding a bookmark to a URL when using a PC-based browser. On-the-fly provisioning allows the subscriber to change the mobile portal home page by deleting, updating and sorting data items dynamically using the data item profiling (as provided for in FIG. 9). On-the-fly provisioning changes are stored in the subscriber's provisioning profile.

The self-learning provisioning feature comprises a self-learning engine that keeps track of frequent actions and suggests adding specific rules generated from the frequent actions (i.e., looking for specific information or deleting information immediately after its appearance on the mobile portal home page). When a subscriber repeats the identical process several times, the self-learning provisioning feature of the present invention will suggest to the subscriber a presentation rule (or presentation rules) or a subscriber provisioning profile change that replicates the repeated process. The subscriber can merely accept the suggested presentation rule or subscriber provisioning profile change, and the repeated behavior will now be replicated without further intervention from the subscriber. The present invention uses well-known data mining techniques to suggest presentation rules or provisioning profile changes to the subscriber.

Referring to FIG. 9, an exemplary process flow for the setting of a profile for a data item on a mobile portal home page is illustrated. This process flow is merely illustrative of the setting of a data item profile and is not limiting in any way.

At S100, the subscriber selects the data item whose profile will be set or updated. At S110, the subscriber selects the location on the mobile portal home page where the data item will be displayed (i.e., which line of the mobile portal home page will the data item be assigned). Next, as S120, the subscriber selects the priority (high, medium, low, none) to be assigned to the data item. At S130, the subscriber selects whether the data item will issue a notification alert to the subscriber if the data item changes. For example, if a stock that the subscriber holds reaches a certain price threshold, the subscriber will be notified by sound or flashing of a symbol on the mobile terminal display screen. This also implies that the subscriber will receive a notification (e.g., by SMS) if the subscriber is not in session when the triggering event occurs. If a subscriber "marks" a specific topic (e.g., bids) as "notify me", not only will the subscriber receive a prompt on the mobile portal home page, but it is possible that a message (e.g., SMS, e-mail, etc.) will be sent to the subscriber when the subscriber is not in session. Again, the mobile portal server 20 accomplishes these tasks according to the subscriber provisioning profile 44 stored in the subscriber database 25.

The updating of a data item according to its profile will be described below in greater detail. The subscriber selects among several presentation rules to control the display of data items on the mobile portal home page. At S140, the subscriber selects among the available show rules. The show rules relate to time, event or location. The show rules include, but are not limited to, showing a data item for a specific time, showing a data item for a specific event, and showing a data item based on a particular location. For example, a data item that relates to a particular stock will only appear if the stock has exceeded a value predetermined by the subscriber.

At S150, the subscriber selects among the available delete rules. The delete rules include, but are not limited to, deleting a data item after a specific time, deleting a data item after a specified number of hours have passed, deleting a data item after a specified event has occurred or deleting a data item after the subscriber has read the data item. It is important to note that both the show and delete rules have default settings that are application-specific. That is, each application is assigned default settings for the show and delete rules, and the subscriber has the ability to change the default rule settings when provisioning a data item. For example, a subscriber adds a weather data item to his mobile portal home page and the default delete rule for this particular data item states that the data item will be deleted two hours after it is sent to the user. While provisioning the data item, the subscriber chooses not to change the delete rule from its default setting. Thus, two hours after the subscriber receives the weather data item, it is deleted according to the default delete rule. This example is for illustrative purposes only and is not meant to limit the present invention in any way.

At S160, the subscriber stores the new data item profile in the subscriber database 25 that is part of the mobile portal server 20.

### 5. Data Item Processing and Display

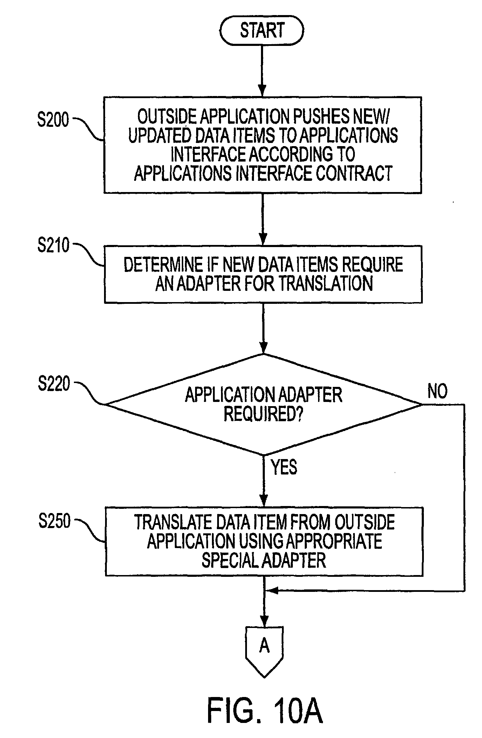

Referring to FIGS. 10A-10C, an exemplary process flow according to the present invention is described. For this exemplary process flow, a few assumptions must be considered:
1. The subscriber has a subscriber profile including his initial preferences stored in the subscriber database 25.
2. The subscriber is provisioned to the outside applications to which his subscriber profile refers.

Referring to FIG. 10A, at S200, an outside application pushes new/updated data items to the application interface process 23 according to the application interface contract 43. As described above, these new/updated data items are pushed to the applications interface process 23 on the basis of subscriber provisioning profile data forwarded to the outside application. At S210-S220, the application interface process 23 determines if an application adapter 24 is necessary to translate the data items received from the outside application. If no application adapters 24 are required, then the processing continues to S260. If the data item requires translation, then at S250, an applications adapter translates the data items.

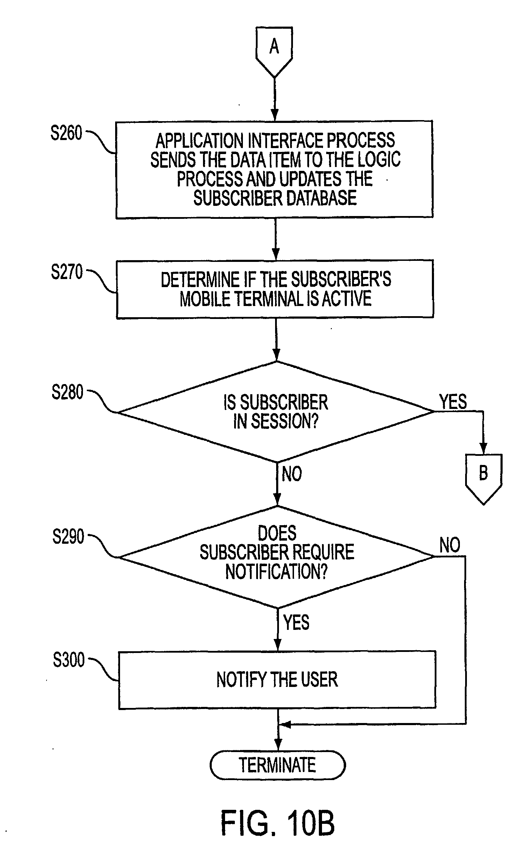

Referring to FIG. 10B, at S260, the application interface process 23 stores the data items in the subscriber database 25, and triggers the control process 22. When the outside application transmits the data items, they are associated with a particular subscriber, as the outside application uses the previously transmitted application-subscriber profile in order to select the data items for transmission. This association is used to store the data items in the subscriber database 25.

At S270-S280, the control process 22 determines if the subscriber is in session, i.e., is the subscriber's terminal active? If the subscriber's terminal is not active, at S290, the present invention determines if the subscriber requires notification of the updated data item. The data item profile that is part of the subscriber provisioning profile determines if the subscriber will be notified (i.e., notification alert). If the data item profile does not require notification, the process terminates. At S300, if the data item profile does require subscriber notification, the present invention notifies the subscriber (e.g. by sending an SMS) of the updated data item.

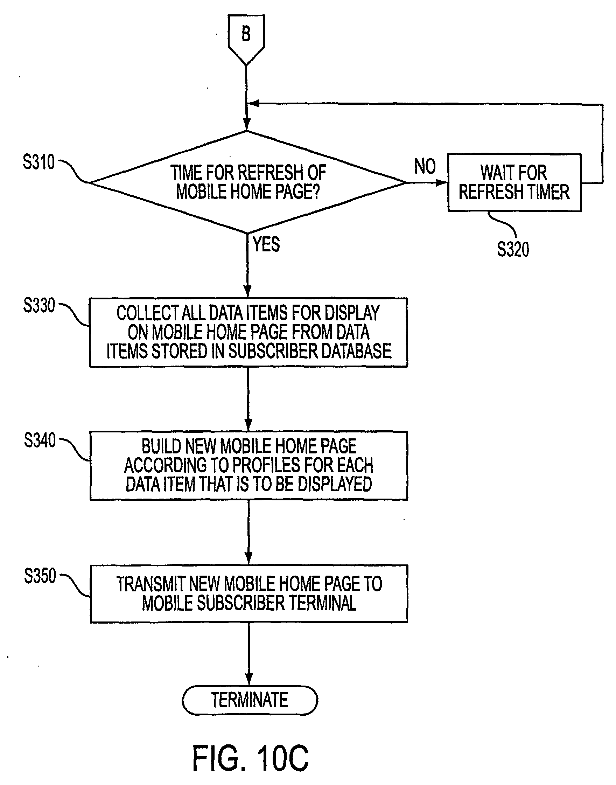

Referring to FIG. 10C, if the subscriber's terminal is active, then, at S310-S320, the present invention determines if it is time to refresh the mobile portal home page. The time to refresh the mobile portal home page is determined by the subscriber provisioning profile 44.The time to refresh a data item is determined by comparing the current time with the show rule stored for this particular data item in the the subscriber provisioning profile 44. The show rule dictates a refresh rate for the data item, and the requisite amount of time has passed since the last refresh, then the mobile portal home page should be refreshed. If the refresh time does not indicate that the mobile portal home page should be refreshed, the present invention goes into a wait loop until the refresh timer indicates that the mobile portal home page is to be refreshed.

If the mobile portal home page is to be refreshed, at S330, all data items for display on the mobile portal home page are collected from the data items stored in the subscriber database 25. At S340, a new mobile portal home page is built according to the presentation rules for priority, etc. as described above. Finally, at S350, the new mobile portal home page is transmitted to the subscriber.

### 6. Auction

Referring to FIG. 8, a mobile portal page 75 with a data item describing the bidding for DVD player with a description of the item and the current bid for the item is illustrated. The data item shows in detail the item that is currently up for bid and current bidding level. The subscriber is provided with links to find more detail about the product or to enter a bid for the item.

The data item aspect of the present invention forms the basis for stimulating push pages in order to retrieve the personalized information that the subscriber desires. The subscriber avoids having to pull the information in the conventional way from generic menu driven links.

As part of a subscriber's profile, the subscriber defines his mobile portal home page on a per data item basis. A profile for a data item includes location on the mobile portal home page (i.e., first line, second line, etc.), priority, notification alert Y/N per change in each data item, and parameters for show/delete. The profiles for the data items on a mobile portal home page work to dynamically update the subscriber's mobile portal home page, as well as update the information contained in those data items.

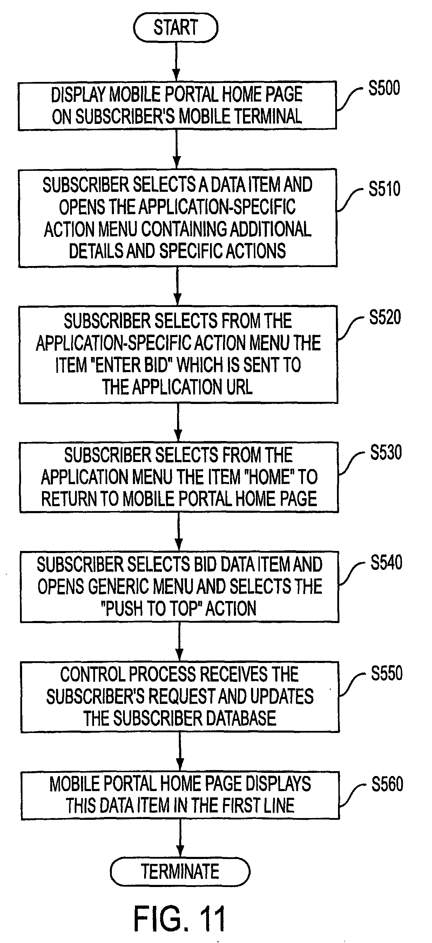

Referring to FIG. 11, an exemplary process flow is illustrated in which a specific application has new information that it sent to the subscriber to replace an existing data item in the mobile terminal home page (the subscriber uses his mobile portal home page to perform an action, and then to track the action being carried by the application). The application chosen for this example is an auction application. The subscriber is provisioned for an auction of a SONY DVD player. The subscriber gave his first bid and now the auction application identified that someone gave a higher bid ($350) and the auction application has to update the subscriber.

At S500, the new mobile portal home page is displayed on the subscriber's terminal. At this point in the auction process, the subscriber receives the updated data item "Sony DVD $350" and the subscriber decides to act in the following manner. At S510, the subscriber selects the bid data item and opens the application-specific action menu associated with that data item. At S520, the subscriber selects the action "ENTER BID" from the application-specific action menu and that command is sent back to the auction application. After the subscriber has bid, at S530, the subscriber selects the action "HOME" from the application menu and the mobile terminal returns to the mobile portal home page. When the subscriber chose to bid on the Sony DVD, the subscriber acts on the application. The application, being well integrated with the mobile portal server, provides the "HOME" action that takes the subscriber directly to the mobile portal home page.

To move the "Sony DVD" data item further up on the mobile portal page 75, the subscriber would typically execute the following process. At S540, the subscriber selects the DVD generic action menu and, from the menu items listed, selects "PUSH TO TOP" action. At S550, the control process 22 (refer to FIG. 4) receives the command to move the data item to the top of the mobile portal home page. At S560, the control process 22 sends out the updated mobile portal home page to the subscriber's terminal. This process flow is exemplary and is not meant to limit the invention in any fashion.

The foregoing description of the aspects of the present invention has been presented for purposes of illustration and description. It is not intended to be exhaustive or to limit the present invention to the precise form disclosed, and modifications and variations are possible in light of the above teachings or may be acquired from practice of the present invention. The aspects of the present invention were described in order to explain the principles of the present invention and its practical application to enable one skilled in the art to utilize the present invention in various embodiments and with various modifications as are suited to the particular use contemplated.

Thus, it will be apparent that numerous modifications may be made thereto without departing from the spirit and scope of the present invention. Further, acronyms are used merely to enhance the readability of the specification and claims. It should be noted that these acronyms are not intended to lessen the generality of the terms used and they should not be construed to restrict the scope of the claims.

## Claims

1. A method for aggregating content for transmittal to a terminal subscriber, the method comprising:
receiving at least one data item from at least one content provider;
selecting at least one data item from the at least one data item according to a provisioning profile associated with the terminal subscriber; and
formatting the at least one data item according to the provisioning profile.

2. The method as claimed in claim 1, the method further comprising updating the provisioning profile of the terminal subscriber based upon at least one command received from the terminal.

3. The method as claimed in claim 2, wherein the at least one command associates a presentation rule with the at least one formatted data item.

4. The method as claimed in claim 2, wherein the updated provisioning profile of the terminal subscriber is stored in a subscriber database.

5. The method as claimed in claim 1, the method further comprising transmitting the provisioning profile of the terminal subscriber to the at least one content provider.

6. The method as claimed in claim 5, wherein the at least one content provider transmits the at least one data item according to the provisioning profile of the terminal subscriber.

7. The method as claimed in claim 1, wherein receiving the at least one data item comprises storing the received at least one data item in a subscriber database.

8. The method as claimed in claim 1, wherein receiving the at least one data item further comprises
translating the received at least one data item so as to comply with the application interface contract if the received at least one data item does not comply with the application interface contract.

9. The method as claimed in claim 1, wherein the formatting of the at least one data item comprises associating a presentation rule with the at least one data item.

10. The method as claimed in claim 9, wherein the formatting of the at least one data item further comprises generating a terminal subscriber home page according to the presentation rule associated with the at least one data item.

11. The method as claimed in claim 1, wherein the at least one formatted data item is transmitted using a data communications protocol to the terminal.

12. The method as claimed in claim 1, wherein the terminal receiving the at least one formatted data item is a mobile terminal.

13. The method as claimed in claim 1, wherein the terminal receiving the at least one formatted data item is a client terminal.

14. An executable program for a computer system for aggregating content for transmittal to a terminal subscriber, the executable program comprising:
a first executable code portion which, when executed on a computer system, receives at least one data item from at least one content provider;
a second executable code portion which, when executed on a computer system, selects at least one data item from the at least one data item according to a provisioning profile associated with the terminal subscriber; and
a third executable code portion which, when executed on a computer system, formats the at least one data item according to the provisioning profile.

15. The executable program as claimed in claim 14, the executable program further comprising an executable code portion which, when executed on a computer system, updates the provisioning profile of the terminal subscriber based upon at least one command received from the terminal.

16. The executable program as claimed in claim 15, the executable program further comprising an executable code portion which, when executed on a computer system, associates a presentation rule with the at least one data item based upon at least one command received from the terminal.

17. The executable program as claimed in claim 14, the executable program further comprising an executable code portion which, when executed on a computer system,
translates the received at least one data item so as to comply with the application interface contract if the received at least one data item does not comply with the application interface contract.

18. The executable program as claimed in claim 14, the executable program further comprising an executable code portion which, when executed on a computer system, generates a terminal subscriber home page according to a presentation rule associated with the at least one data item.

19. An apparatus for aggregating content to be transmitted to a terminal subscriber, the apparatus comprising:
a data receiver that receives at least one data item from at least one content provider;
a data discriminator that selects at least one data item from the at least one data item according to a provisioning profile associated with the terminal subscriber; and
a controller that formats the at least one data item according to the provisioning profile.

20. The apparatus as claimed in claim 19, the apparatus further comprising a receiver that receives at least one command from a terminal to update the provisioning profile associated with the terminal subscriber.

21. The apparatus as claimed in claim 19, the apparatus further comprising a wireless gateway connected to the receiver, wherein the wireless gateway receives the at least command from the terminal.

22. The apparatus as claimed in claim 20, wherein the receiver transmits the at least one command to the controller, and the controller associates a presentation rule with the at least one formatted data item according to the at least one command.

23. The apparatus as claimed in claim 20, wherein the controller stores the updated provisioning profile of the terminal subscriber in a subscriber database.

24. The apparatus as claimed in claim 19, wherein the data discriminator transmits at least a portion of the provisioning profile of the terminal subscriber to the at least one content provider.

25. The apparatus as claimed in claim 24, wherein the at least one content provider transmits the at least one data item according to the provisioning profile of the terminal subscriber to the data receiver.

26. The apparatus as claimed in claim 19, wherein the data discriminator stores the received at least one data item in a subscriber database.

27. The apparatus as claimed in claim 19, wherein the data discriminator:
translates the received at least one data item so as to comply with the application interface contract if the received at least one data item does not comply with the application interface contract.

28. The apparatus as claimed in claim 27, wherein an application adapter translates the received at least one data item so as to comply with the application interface contract.

29. The apparatus as claimed in claim 19, wherein the controller associates a presentation rule with the at least one data item according to the subscriber provisioning profile.

30. The apparatus as claimed in claim 29, wherein the controller generates a terminal subscriber home page according to the presentation rule associated with the at least one data item.

31. The apparatus as claimed in claim 21, wherein the wireless gateway transmits the at least one formatted data item to the terminal.

32. The apparatus as claimed in claim 19, wherein the terminal receiving the at least one formatted data item is a mobile terminal.

33. The apparatus as claimed in claim 19, wherein the terminal receiving the at least one formatted data item is a client terminal.

34. An apparatus for aggregating content to be transmitted to a terminal subscriber, the apparatus comprising:
a database server that stores a provisioning profile for the terminal subscriber;
a control server that receives at least one data item from at least one outside application and adapts the at least one data item into at least one formatted data item for display on a terminal associated with the terminal subscriber according to a provisioning profile stored on the database server; and
a web server that transmits the at least one formatted data item to the terminal and transfers at least one command from the terminal to the control server.

35. The apparatus as claimed in claim 34, further comprising an operator platform for accessing a provisioning profile associated with a terminal subscriber.

36. The apparatus as claimed in claim 34, further comprising a wireless gateway connected to the web server.

37. The apparatus as claimed in claim 36, wherein the wireless gateway receives the at least one command from the terminal.

38. The apparatus as claimed in claim 37, wherein the wireless gateway transmits the at least one command to the control server, and the control server associates a presentation rule with the at least one formatted data item according to the at least one command.

39. The apparatus as claimed in claim 38, wherein the control server stores the updated provisioning profile of the terminal subscriber in a subscriber database stored on the database server.

40. The apparatus as claimed in claim 34, further comprising a short message service center connected to the control server.

41. The apparatus as claimed in claim 34, further comprising an interactive voice response server connected to the control server.

42. The apparatus as claimed in claim 34, wherein the control server transmits the provisioning profile of the terminal subscriber to the at least one content provider.

43. The apparatus as claimed in claim 34, wherein the control server stores the received at least one data item in a subscriber database.

44. The apparatus as claimed in claim 34, wherein the control server
compares the received at least one data item against an application interface contract;
determines if the received at least one data item complies with the application interface contract; and
if the received at least one data item does not comply with the application interface contract, translates the received at least one data item so as to comply with the application interface contract.

45. The apparatus as claimed in claim 44, wherein an application adapter translates the received at least one data item so as to comply with the application interface contract.

46. The apparatus as claimed in claim 34, wherein the control server generates a terminal subscriber home page and transmits the terminal subscriber home page to the web server.

47. A mobile portal server for aggregating content to be transmitted to a terminal subscriber, the mobile portal server comprising:
a subscriber database that stores a provisioning profile for the terminal subscriber;
an applications interface processor that receives at least one data item from at least one outside application and adapts the at least one data item into at least one formatted data item for transmission to a terminal associated with the terminal subscriber according to a provisioning profile stored on the subscriber database; and
a web server that provides access to the at least one formatted data item to the terminal; and
a control processor connected to the applications interface processor, the subscriber database and the web server.

48. The mobile portal server as claimed in claim 47, further comprising an operator platform for accessing a provisioning profile associated with a terminal subscriber.

49. The mobile portal server as claimed in claim 47, further comprising a wireless gateway connected to the mobile portal server.

50. The mobile portal server as claimed in claim 47, further comprising a short message service center connected to the mobile portal server.

51. The mobile portal server as claimed in claim 47, further comprising an interactive voice response server connected to the mobile portal server.

52. The mobile portal server as claimed in claim 47, wherein the applications interface processor
compares the received at least one data item against an application interface contract;
determines if the received at least one data item complies with the application interface contract; and
if the received at least one data item does not comply with the application interface contract, translates the received at least one data item so as to comply with the application interface contract.

53. The mobile portal server as claimed in claim 52, further comprising an application adapter that translates the received at least one data item so as to comply with the application interface contract.

54. The mobile portal server as claimed in claim 47, wherein the control processor generates a terminal subscriber home page and transmits the terminal subscriber home page to the web server.

55. A method for dynamically updating one or more of a plurality of data items sent to a terminal subscriber from a mobile portal server, the method comprising:
selecting one of the plurality of data items;
editing the profile of the selected data item;
sending the edited profile of the data item to the mobile portal server;
receiving a plurality of updated data items from the mobile portal server.

56. The method as claimed in claim 55, the method further comprising ordering the data items for presentation on the terminal of the terminal subscriber according to the edited profile.

57. An executable program for a computer-driven mobile terminal for dynamically updating one or more of a plurality of data items sent to a mobile terminal subscriber from a mobile portal server, the executable program comprising:
a first executable code portion which, when executed on a computer-driven mobile terminal, selects one of the plurality of data items;
a second executable code portion which, when executed on a computer-driven mobile terminal, edits the profile of the selected data item;
a third executable code portion which, when executed on a computer-driven mobile terminal, sends the edited profile of the data item to the mobile portal server; and
a fourth executable code portion which, when executed on a computer-driven mobile terminal, receives a plurality of updated data items from the mobile portal server.
